# FASCICULE DE BREVET EUROPEEN

(11) **EP 4 451 877 B1**
(45) Date de publication et mention de la délivrance du brevet: **10.09.2025**
(21) Numéro de dépôt: 22850597.0
(22) Date de dépôt: 22.12.2022
(51) Int. Cl.: A01N 35/06, A01N 59/00, A01P 13/02

(54) **UTILISATION DE PHÉNYLPHÉNALÉNONES EN TANT QU'HERBICIDE SÉLECTIF**
VERWENDUNG VON PHENYLPHENALENONEN ALS SELEKTIVES HERBIZID
USE OF PHENYLPHENALENONES AS SELECTIVE HERBICIDE

(30) Priorité: 23.12.2021 FR 2114329
(43) Date de publication de la demande: 30.10.2024
(73) Titulaire: Université de Limoges, 87032 Limoges (FR)
(72) Inventeur: ISSAOUI, Mohamad, 87000 Limoges (FR); RIOU, Catherine, 87170 Isle (FR); AMARA, Holm, 87000 Limoges (FR); GODARD, Jérémy, 87000 Limoges (FR); BREGIER, Frédérique, 87920 Condat sur Vienne (FR); SOL, Vincent, 87000 Limoges (FR)
(74) Mandataire: Plasseraud IP
(86) Numéro de dépôt international: PCT/FR2022/052474
(87) Numéro de publication internationale: WO 2023/118757

(56) Documents cités:
- US-A1- 2019 111 168
- LEDERER B ET AL: "Phytotoxic activity of middle-chain fatty acids II: peroxidation and membrane effects", PESTICIDE BIOCHEMISTRY AND PHYSIOLOGY, ACADEMIC PRESS, US, vol. 80, no. 3, 1 November 2004 (2004-11-01), pages 151 - 156, XP004650042, ISSN: 0048-3575, DOI: 10.1016/J.PESTBP.2004.06.010
- CRISTINA FLORS ET AL: "Light and Singlet Oxygen in Plant Defense Against Pathogens: Phototoxic Phenalenone Phytoalexins †", ACCOUNTS OF CHEMICAL RESEARCH, vol. 39, no. 5, 1 May 2006 (2006-05-01), pages 293 - 300, XP055035752, ISSN: 0001-4842, DOI: 10.1021/ar0402863
- LAZZARO ALEJANDRA ET AL: "Light- and singlet oxygen-mediated antifungal activity of phenylphenalenone phytoalexins", vol. 3, no. 7, 5 May 2004 (2004-05-05), GB, pages 706 - 710, XP055948061, ISSN: 1474-905X, Retrieved from the Internet <URL:http://dx.doi.org/10.1039/B401294A> DOI: 10.1039/B401294A

## Description

### Domaine technique

La présente demande relève du domaine des herbicides sélectifs.

### Technique antérieure

La lutte contre les adventices ou mauvaises herbes repose essentiellement sur l'utilisation de produits chimiques non spécifiques, avec des risques maintenant bien connus pour les utilisateurs, l'environnement et les plantes non ciblées.

Par ailleurs, au cours de la dernière décennie, l'usage intensif de ces herbicides a provoqué plusieurs crises sanitaires et environnementales. Il est donc indispensable de mettre au point des nouveaux herbicides plus respectueux de l'environnement et ayant un impact réduit sur la santé humaine et la biodiversité animale et végétale.

Les produits naturels désignent les métabolites secondaires dérivés des plantes, des animaux, des insectes et des micro-organismes, et comprennent des composés tels que les alcaloïdes, les terpènes, les stéroïdes, les polykétides, les quinones, les lignanes, les esters et les lactones, pour n'en citer que quelques-uns. Les phénalénones sont un groupe de produits naturels que l'on rencontre aussi bien chez les plantes que chez les champignons et qui possèdent une importance biologique et chimique significative.

Les phénylphénalénones et des dérivés des phénalénones, ont été retrouvés spécifiquement dans un grand nombre de familles de plantes telles que la famille des Haemodoraceae, des Pontaderiaceae, des Strelitziaceae et des Muscaceae.

La majorité des phénylphénalénones sont issues de la famille des Haemodoraceae, incluant l'espèce *Anigozanthos.* Elles sont aussi retrouvées dans la plante aquatique *Eichhornia crassipes* (Pontaderiaceae), ainsi que dans *Musa acuminata* et *M.paradisiaca* (Muscaceae) où elles sont considérées comme des phytoalexines.

Parmi les phénylphénalénones, l'anigorufone est considérée par certains auteurs comme la plus simple des phénylphénalénones et a été isolée pour la première fois à partir d'une plante vivace rhizomateuse appartenant à la Famille des Haemodoraceae appelée patte de kangourou rouge (Anigozanthos rufus) (Cooke and Thomas, 1975).

Des propriétés antiparasitaires, antibactériennes et antifongiques ont été notamment décrites pour l'anigorufone.

Il est également considéré que l'anigorufone, au même titre que d'autres phénylphénalénones, joue un rôle significatif dans le système de défense des plantes.

Les phytoalexines, sont des métabolites dont la synthèse est induite en cas d'attaque par un pathogène. Ces métabolites confèrent par la suite à la plante une certaine résistance antimicrobienne.

L'activité biologique semble liée à deux phénomènes. Le premier est l'activité photosensibilisatrice. A la lumière, les phénylphénalénones produisent des espèces réactives de l'oxygène capables d'oxyder les molécules environnantes, notamment les éléments constitutifs des pathogènes (lipides, protéines, acides nucléiques). Deux mécanismes sont classiquement décrits : Type I, qui permet de produire des radicaux libres, et Type II, qui permet de produire de l'oxygène singulet (Lazzaro 2004 : 10.1039/B401294A, Flors 2006 : 10.1021/ar0402863), chacun de ces deux mécanismes pouvant apporter leur contribution, mais le mécanisme de Type II étant à priori majoritaire.

La seconde activité serait liée à la planarité du motif phénalénone. Cette planarité pourrait induire une action d'intercalation avec l'ADN des pathogènes, et serait modulée par la présence des groupements phényles et hydroxyles. (Quinones 2000 : 10.3390/50700974, Lazzaro 2004)

De manière inattendue, les inventeurs ont mis en évidence que les phénylphénalénones présentaient une activité phytotoxique sélective et qu'elles pouvaient par conséquent être utilisées comme herbicide.

### Résumé

La présente invention concerne l'utilisation de phénylphénalénones de formule (I) 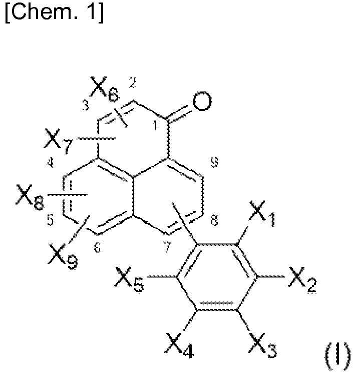
en tant qu'herbicide sélectif
dans laquelle :
   X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
   R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
   le groupement phényl et X₆, X₇, X₈, X₉ peuvent être indépendamment positionnés en C₂, C₃, C₄, C₅, C₆, C₇, C₈, C₉.

Les inventeurs ont en effet avantageusement démontré que les phénylphénalénones peuvent être utilisées en tant qu'herbicide sélectif. Alors que les phénylphénalénones inhibent significativement le développement des adventices telles que le coquelicot, la morelle noire, le mouron blanc, le ray-gras, le chénopode, le faux millet, le rumex et le pissenlit, elles préservent avantageusement les plantes d'intérêt agronomique telles que le blé, le maïs, le tournesol, la tomate, l'oignon, le navet et l'épinard et n'affectent pas leur développement.

Ainsi, les phénylphénalénones préservent avantageusement les plantes non ciblées.

Ces molécules constituent donc une alternative aux herbicides présents sur le marché, plus respectueuses de l'environnement et ayant un impact réduit sur la santé humaine et la biodiversité animale et végétale.

Ainsi, la présente invention concerne également une composition herbicide sélective comprenant
- des phénylphénalénones de formule (I)
- au moins un surfactant.

La présente invention concerne également un procédé de désherbage comprenant au moins une étape d'application de phénylphénalénones de formule (I) dans un espace de culture, lesdites phénylphénalénones étant appliquées par pulvérisation foliaire

### Brève description des dessins

D'autres caractéristiques, détails et avantages apparaîtront à la lecture de la description détaillée ci-après, et à l'analyse des dessins annexés, sur lesquels :
**Fig. 1**

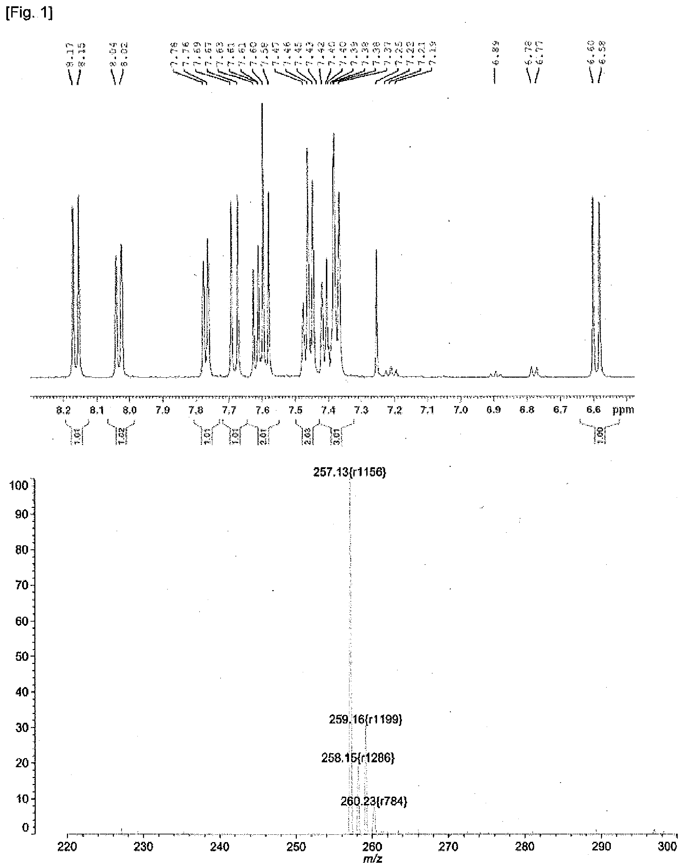

   [Fig. 1] correspond au chromatogramme et au spectre RMN de la phényl-9-phénalén-1-one.
**Fig. 2**

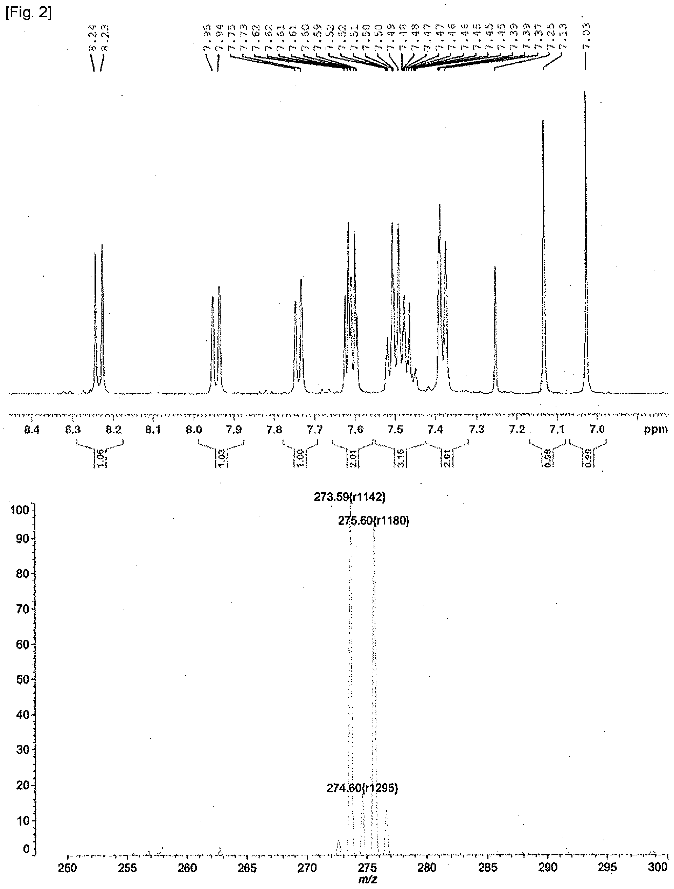

   [Fig. 2] correspond au chromatogramme et au spectre RMN de l'anigorufone.
**Fig. 3**

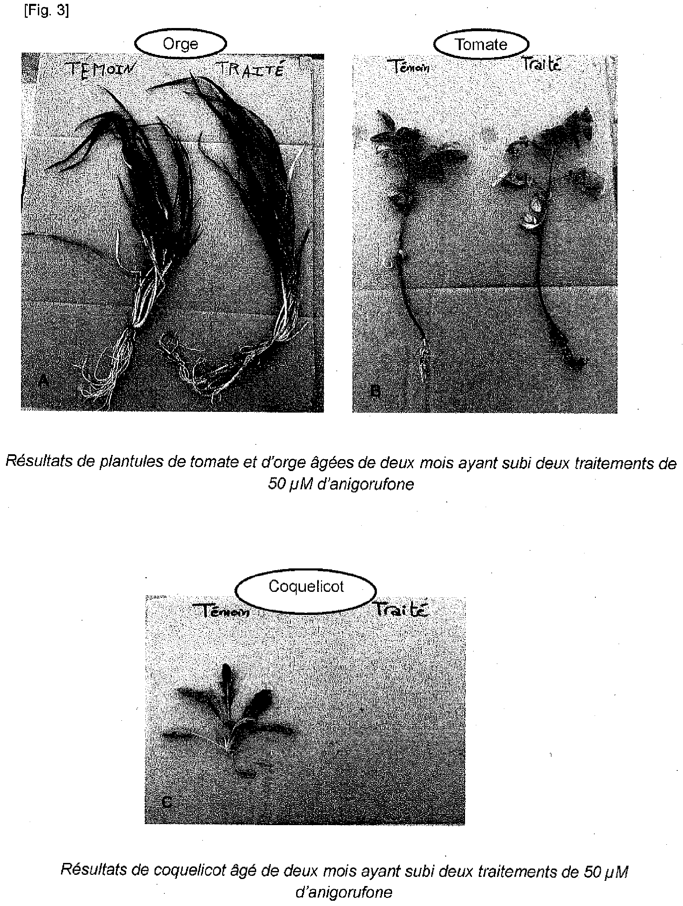

   [Fig. 3] A montre les résultats de plantules d'orge âgées de deux mois, n'ayant pas subi de traitement (témoin) et ayant subi deux traitements de 50µM d'anigorufone (traité).
   [Fig. 3] B montre les résultats de plantules de tomate âgées de deux mois n'ayant pas subi de traitement (témoin) et ayant subi deux traitements de 50µM d'anigorufone (traité).
   Fig. 3] C montre les résultats de coquelicot âgés de deux mois, n'ayant pas subi de traitement (témoin) et ayant subi deux traitements de 50µM d'anigorufone (traité).
**Fig. 4**

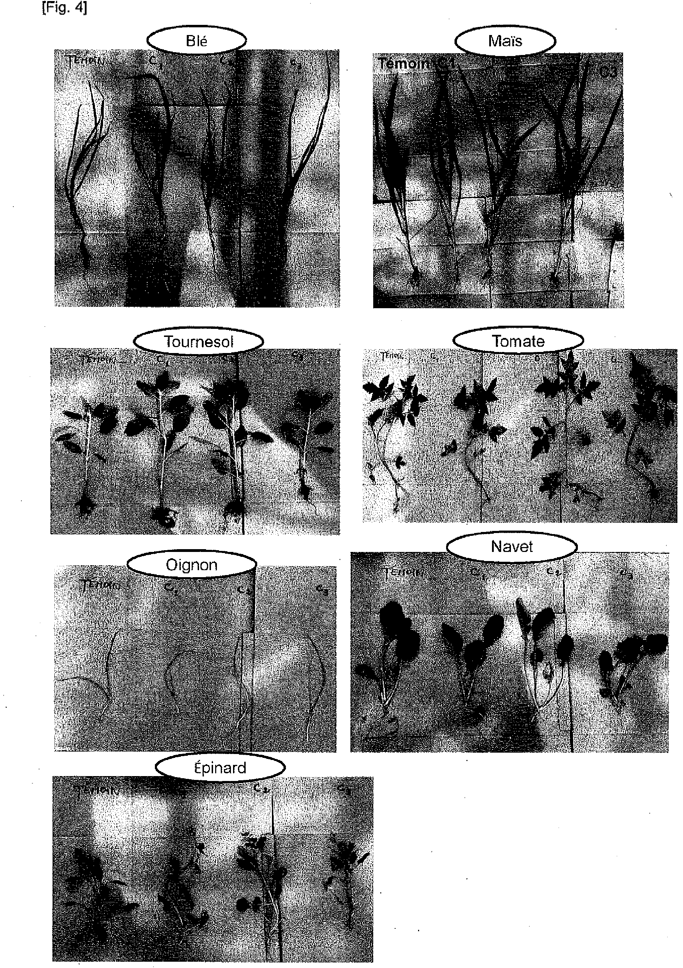

   [Fig. 4] montre l'absence d'effet de l'anigorufone sur 7 espèces de plantes d'intérêts à savoir le blé, le maïs, le tournesol, la tomate, l'oignon, le navet et l'épinard.
**Fig. 5**

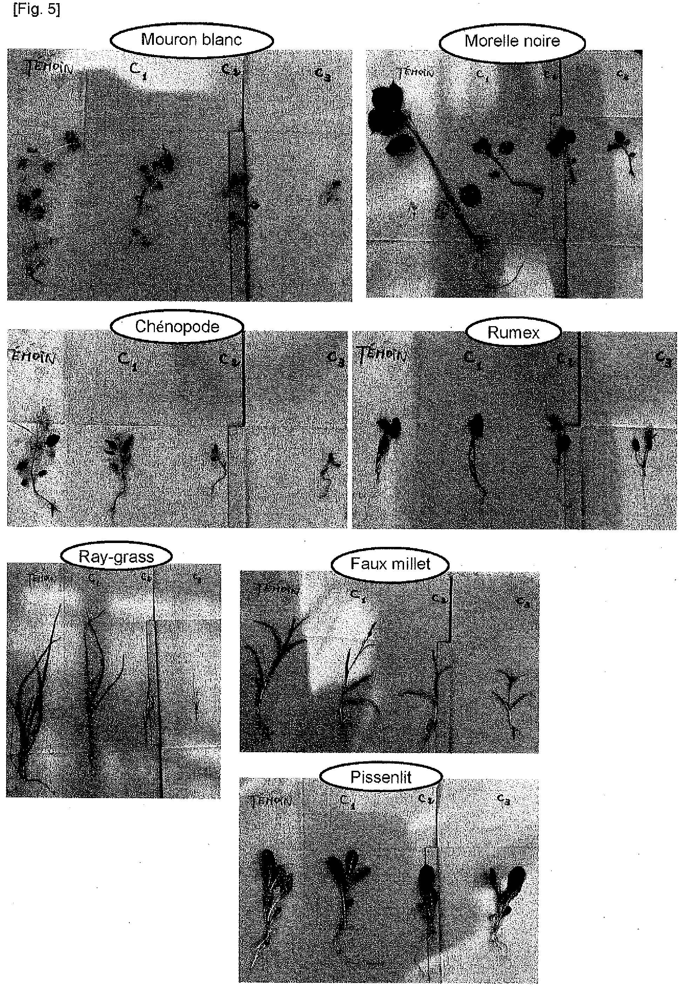

   [Fig. 5] montre l'effet de l'anigorufone sur les 8 espèces de mauvaises herbes, à savoir le coquelicot, la morelle noire, le mouron blanc, le ray-gras, le chénopode, le faux millet, le rumex et le pissenlit.

### Description détaillée

### Utilisation comme herbicide sélectif

Ainsi, la présente invention concerne l'utilisation de phénylphénalénones de formule (I) 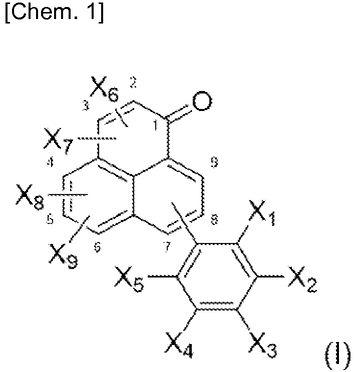
en tant qu'herbicide sélectif
dans laquelle :
   X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
   R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
   le groupement phényl et X₆, X₇, X₈, X₉ peuvent être indépendamment positionnés en C₂, C₃, C₄, C₅, C₆, C₇, C₈, C₉.

Un alkyle désigne un groupe à chaîne linéaire ou ramifiée contenant par exemple 1, 2, 3, 4, 5, ou 6, 7 ou 8 atomes de carbone. Des exemples de radicaux alkyle appropriés sont les suivants : méthyle, éthyle, n-propyle, isopropyle, n-butyle, isobutyle, sec-butyle, tert-butyle, n-pentyle, isopentyle, n-hexyle, etc.

### Phénylphénalénones

Les phénylphénalénones peuvent être obtenues par tout procédé de synthèse, ou par isolement à partir d'une source végétale et en particulier d'une plante.

Les phénalénones que l'on trouve dans les plantes sont pour la plupart des phénylphénalénones, dont la structure chimique est constituée d'un noyau phénalénone et d'un seul substituant phényl.

Les phénylphénalénones pourront être obtenues à partir de plantes de la famille des des *Haemodoraceae,* des *Pontaderiaceae,* des *Strelitziaceae,* des *Sterculiaceae* et des *Muscaceae.*

### Groupement phényl en C9 - 9-Phenylphénalénones

Selon un mode de réalisation, le groupement phényl est positionné en C9. Ainsi, selon un mode de réalisation, les phénylphénalénones sont des phénylphénalénones de formule (II) :

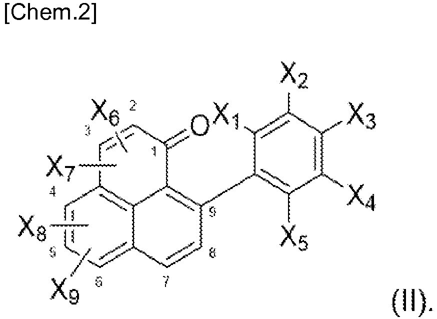

Selon un mode de réalisation, les phénylphénalénones sont des phénylphénalénones de formule (II) 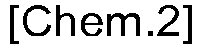 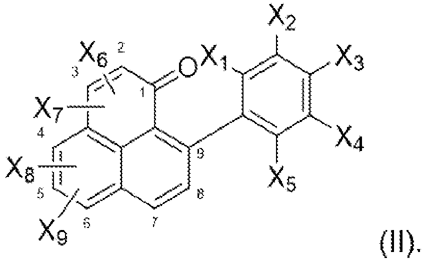 dans laquelle
X₁, X₂, X₃, X₄, X₅, X₆, X₇, X₈, X₉ sont indépendamment choisis parmi -H, -OR;
R peut être H, un alkyl, préférentiellement CH₃, un cellobiose, un dérivé de glucopyranosyl tel que un 6-malonyl-β-glucopyranosyl, un 4-*O*-β-D-glucopyranosyl, un 4-O-[(6"-O-Allophanyl)-β-D-glucopyranosyl]
X₆, X₇, X₈, X₉ peuvent être indépendamment positionnés en C₂, C₃, C₄, C₅, C₆, C₇, C₈.

Selon un mode de réalisation, les phénylphénalénones seront choisies dans le tableau suivant :

**[Tableau 1]**

| | | | |
|---|---|---|---|
| 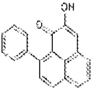 Anigorufone | 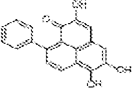 Lachnanthoside aglycone | 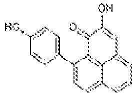 Hydroxyanigorufone | 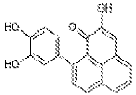 Dihydroxyanigorufone |
| 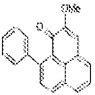 Methoxyanigorufone | 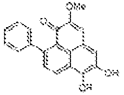 R = cellobiose Haemocorin | 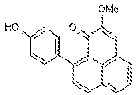 | 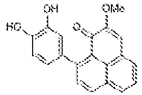 |
| 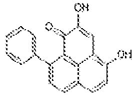 | 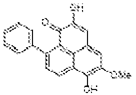 Haemocorin aglycone | 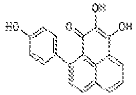 Musanolone E | 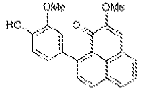 |
| 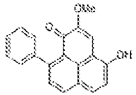 | 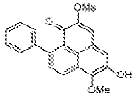 Haemoxiphidone | 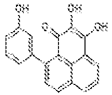 | 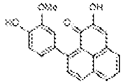 Musanoione F |
| 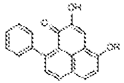 R = 6-malonyl-□-glucopyranosyl | 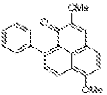 | 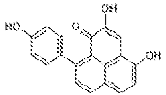 Thyrsiflonn | 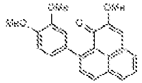 |
| 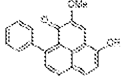 R = 4-*O*-□-D-glucopyranosyl | 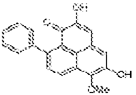 Anigozanthin | 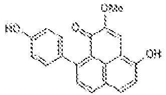 | 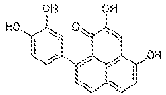 |
| 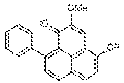 R = 4-*O*-[(6"-O-Allophanyl)-□-D-glucopyranosyl] | 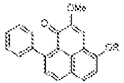 R = 6-malonyl-□-glucopyranosyl | 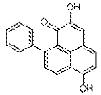 Lachnanthocarpone | 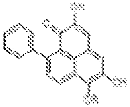 Lachnanthoside R= diose inconnu |

### Groupement phényl en C4 - 4-Phenylphénalénones

Selon un mode de réalisation, le groupement phényl est positionné en C4. Ainsi, selon un mode de réalisation, les phénylphénalénones sont des phénylphénalénones de formule (III) :

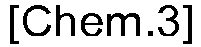

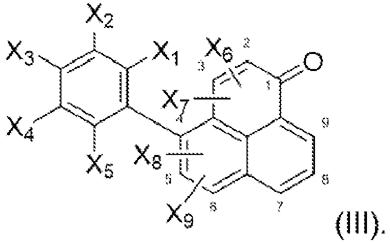

Selon un mode de réalisation, les phénylphénalénones sont des phénylphénalénones de formule (III) 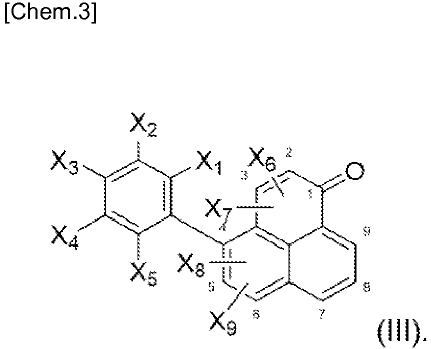 dans laquelle
X₁, X₂, X₃, X₄, X₅, X₆, X₇, X₈, X₉ sont indépendamment choisis parmi -H, -OR;
R peut être H, un alkyl, préférentiellement CH₃,
X₆, X₇, X₈, X₉ peuvent être indépendamment positionnés en C₂, C₃, C₅, C₆, C₇, C₈, C₉.

Selon un mode de réalisation, les phénylphénalénones seront choisies dans le tableau suivant :

**[Tableau 2]**

| | |
|---|---|
| 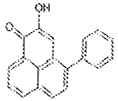 Isoanigorufone (4'-dehydroxyirenolone) | 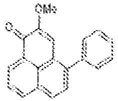 |
| 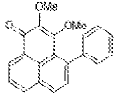 | 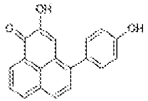 |
| 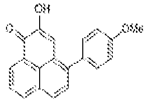 | 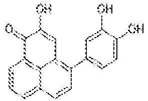 |

### Groupement phényl en C7 - 7-Phenylphénalénones

Selon un mode de réalisation, le groupement phényl est positionné en C7. Ainsi, selon un mode de réalisation, les dérivés de phénylphénalénones sont des phénylphénalénones de formule (IV) :

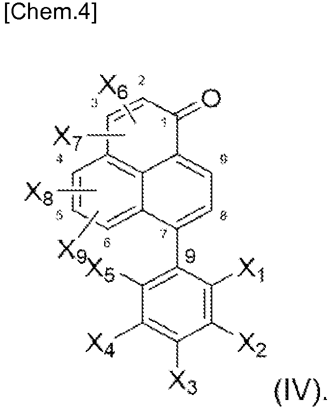

Selon un mode de réalisation, les phénylphénalénones sont des phénylphénalénones de formule (IV) 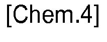 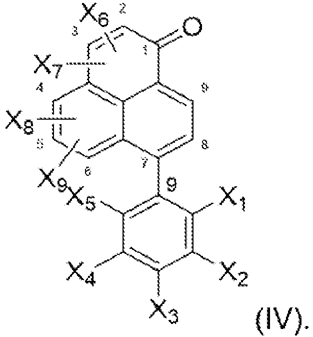 dans laquelle :
X₁, X₂, X₃, X₄, X₅, X₆, X₇, X₈, X₉ sont indépendamment choisis parmi -H, -OR
R peut être H, un alkyl, préférentiellement CH₃, un dérivé de glucopyranosyl tel que un [(6"-O-Allophanyl)-β-D-glucopyranosyl], un 6-*O*-β-D-glucopyranosyl, un β-D-glucopyranosyl, un 6-malonyl-β-D-glucopyranosyl,
X₆, X₇, X₈, X₉ peuvent être indépendamment positionnés en C₂, C₃, C₄, C₅, C₆, C₈, C₉.

Selon un mode de réalisation, les phénylphénalénones seront des phénylphénalénones choisies dans le tableau ci-après :

**[Tab.3]**

| | | |
|---|---|---|
| 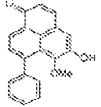 | 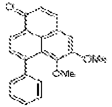 | 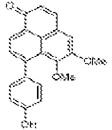 |
| 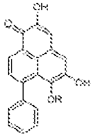 R = [(6"-*O*-allophanyl)-β-D-glucopyranosyl] | 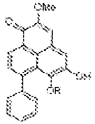 R = [(6"-*O*-allophanyl)-β-D-glucopyranosyl] | 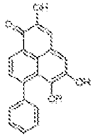 R = 6-*O*-β-D-glucopyranosyl |
| 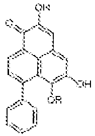 R= β-D-glucopyranosyl | 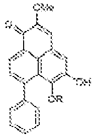 R = 6-malonyl-β-D-glucopyranosyl | 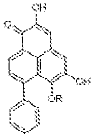 R = 6-malonyl-β-D-glucopyranosyl |
| 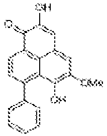 Haemodorin aglycone | 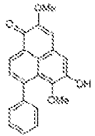 | 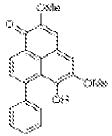 xiphidone |
| 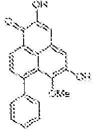 Fuliginol | 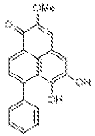 | 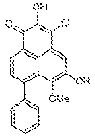 3-Chlorofuliginol |

### 8-, 6- and 2-Phenylphenalenones

Selon un mode de réalisation, les phénylphénalénones seront des phénylphénalénones choisies dans le tableau ci-après :

**[Tab.4]**

| | |
|---|---|
| 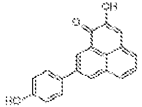 | 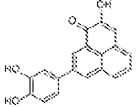 |
| 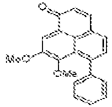 | 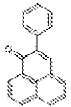 |

Selon un mode de réalisation, les phénylphénalénones sont choisies parmi l'anigorufone, la p-Hydroxyphénylphénalénone, l'hydroxyanigorufone et la lachnanthocarpone.

### Anigorufone

Selon un mode de réalisation, la phénylphénalénone est l'anigorufone (numéro CAS : 56252-32-5) de formule (IV)

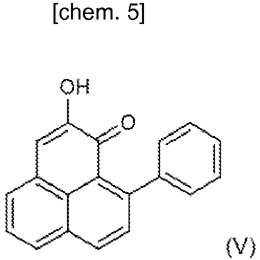

Un procédé de synthèse de l'anigorufone a par exemple été décrit par Otalvaro et al. en 2004 (Otalvaro 2004 : 10.1002/jlcr.808).

L'anigorufone peut aussi être obtenue à partir de *Anigozanthos rufus, Anigozanthos preissii, Wachendorfia thyrsiflora, Macropidia fuliginosa, Musa acuminata, Monochoria elata.*

### p-Hydroxyphénylphénalénone

Selon un autre mode de réalisation, la phénylphénalénone est la p-Hydroxyphénylphénalénone de formule (VI)

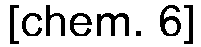

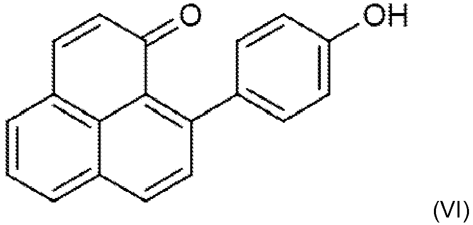

### Hydroxyanigorufone

Selon un autre mode de réalisation, la phénylphénalénone est l'hydroxyanigorufone (numéro CAS : 56252-02-9) de formule (VII)

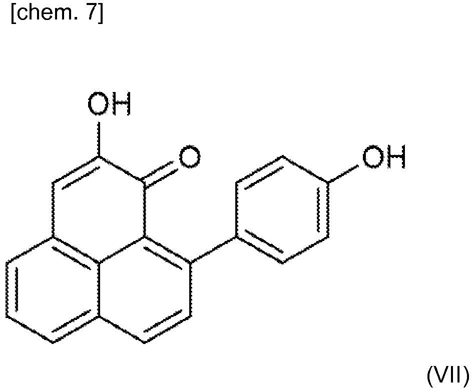

Elle peut être obtenue à partir *de Anigozanthos rufus, Anigozanthos preissii, Wachendorfia thyrsiflora, Conostylis setosa, Musa acuminata, Musa itinerans, Musella lasiocarpa, Banana cultivars.*

La p-Hydroxyphénylphénalénone et l'Hydroxyanigorufone pourront être obtenues grâce aux procédés de synthèse par exemple décrits dans Quinones 2000 (10.3390/50700974), l'hydroxyphénylphénalénone étant obtenue après la déméthylation de la méthoxyphénylphénalénone décrite dans l'article.

### Lachnanthocarpone.

Selon un autre mode de réalisation, la phénylphénalénone est la lachnanthocarpone (numéro CAS : 28241-21-6) de formule (VIII) :

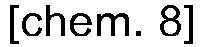

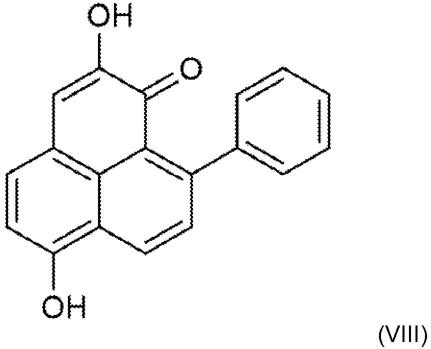

Elle peut être obtenue à partir de *Lachnanthes tinctoria, Wachendorfia thyrsiflora, Wachendorfia paniculata, Monochoria elata.*

Un procédé de synthèse de la lachnanthocarpine a également été décrit par Otalvaro et al. en 2004 (Otalvaro 2004 : 10.1002/jlcr.808).

### Herbicide sélectif

Un herbicide est un pesticide à usage agricole et domestique dont l'activité sur le métabolisme des plantes entraîne leur mort.

On entend par « herbicide sélectif » un herbicide qui vise à éliminer les adventices sans endommager les plantes d'intérêt agronomique. Il s'agit donc de lutter contre les adventices ou « mauvaises herbes » qui sont indésirables pour les cultures et de préserver les plantes non ciblées (les plantes d'intérêt agronomique) et l'espace de culture.

### Adventices

On entend par le terme « adventice » toute plante herbacée ou ligneuse qui se trouve dans un agroécosystème sans y avoir été intentionnellement installée. Il s'agira par exemple d'une espèce végétale indésirable présente dans un champ de culture d'une autre espèce végétale.

Selon un mode de réalisation, les adventices seront choisies parmi des adventices appartenant à la famille des Papavéracée, des Amaranthacées, des Poacées, des Polygonacées, des Solanacées, des Astracées, des Caryophyllacées, des Urticaceae.

Parmi la famille des Papavéracée, on peut citer les adventices du genre *Papaver* tels que le coquelicot (*Papaver rhoeas*)*.*

Parmi la famille des Amaranthacées, on peut citer les adventices du genre *Chenopodium* tel que le chenopode (*Chenopodium album*)*.*

Parmi la famille des Poacées, on peut citer les adventices du genre *Panicum* tel que le faux millet (*Panicum miliaceum*)*,* du genre *Lolium* tel que le ray gras (*Lolium multiforum*)*,* du genre *Echinochloa* tel que le millet (*Echinochloa frumentacea*)*.*

Parmi la famille des Polygonacées, on peut citer les adventices du genre *Rumex* tel que le rumex (*Rumex crispus*)*.*

Parmi la famille des Solanacées, on peut citer les adventices du genre *Solanum* tel que la morelle noire (*Solanum nigrum*)*,* du genre *Datura* tel que la datura (*Datura stramonium*)*.*

Parmi la famille des Astracées, on peut citer les adventices du genre *Taraxacum* tel que le pissenlit (*Taraxacum officinale*)*.*

Parmi la famille des Caryophyllacées, on peut citer les adventices du genre *Stellaria* tel que le mouron blanc (*Stellaria media*)*.*

Parmi la famille des Urticaceae, on peut citer les adventices du genre *Urtica* tel que l'ortie (*Urtica dioïca*)*.*

Ainsi, selon un mode de réalisation, les adventices seront choisies parmi des adventices appartenant aux genres *Papaver, Chenopodium, Panicum, Lolium, Rumex, Solanum, Taraxacum, Stellaria, Urtica, Echinochloa, Datura.*

Selon un mode de réalisation préféré, les adventices seront choisies parmi des adventices appartenant aux genres *Papaver, Chenopodium, Panicum, Lolium, Rumex, Solanum, Taraxacum, Stellaria.*

Selon un mode de réalisation, les adventices seront choisies parmi le coquelicot (*Papaver rhoeas*)*,* le chenopode (*Chenopodium album*)*,* le faux millet (*Panicum miliaceum*)*,* le ray gras (*Lolium multiforum*)*,* le rumex (*Rumex crispus*)*,* la morelle noire (*Solanum nigrum*)*,* le pissenlit *(Taraxacum officinale),* le mouron blanc (*Stellaria media*)*,* l'ortie (*Urtica dioïca*)*,* le millet (*Echinochloa frumentacea*)*,* la datura (*Datura stramonium*)*.*

Selon un mode de réalisation préféré, les adventices seront choisies parmi le coquelicot (*Papaver rhoeas*)*,* le chenopode (*Chenopodium album*)*,* le faux millet (*Panicum miliaceum*)*,* le ray gras (*Lolium multiforum*)*,* le rumex (*Rumex crispus*)*,* la morelle noire (*Solanum nigrum*)*,* le pissenlit (*Taraxacum officinale*)*,* le mouron blanc (*Stellaria media*)*.*

### Plantes d'intérêt agronomique

Selon un mode de réalisation, les plantes d'intérêt agronomique seront choisies parmi des plantes appartenant à la famille des Solanacées, des Poacées, des Vitacées, des Amaranthacées, des Brassicacées, des Liliacées, des Astracées, des Rosaceae.

Parmi la famille des Solanacées, on peut citer les plantes d'intérêt agronomique du genre *Lycopersicum* telle que la tomate (*Lycopersicum esculentum*)*,* du genre *Solanum* telle que la pomme de terre (*Solanum tuberosum*)*,* du genre *Nicotina* tel que le tabac (*Nicotiana tabacum*)*.*

Parmi la famille des Poacées, on peut citer les plantes d'intérêt agronomique du genre *Hordeum* tel que l'orge (*Hordeum vulgare*)*,* du genre *Triticum* tel que le blé (*Triticum sativum*)*,* du genre *Zeya* tel que le maïs (*Zeya mays*)*.*

Parmi la famille des Vitacées, on peut citer les plantes d'intérêt agronomique du genre *Vitis* telle que la vigne (*Vitis vinifera*)*.*

Parmi la famille des Amaranthacées, on peut citer les plantes d'intérêt agronomique du genre *Spinacia* tel que l'épinard (*Spinacia oleracea*)*.*

Parmi la famille des Brassicacées, on peut citer les plantes d'intérêt agronomique du genre *Brassica* tel que le navet (*Brassica rapa*)*.*

Parmi la famille des Liliacées, on peut citer les plantes d'intérêt agronomique du genre *Allium* tel que l'oignon (*Allium cepa*)*.*

Parmi la famille des Astracées, on peut citer les plantes d'intérêt agronomique du genre *Helianthus,* tel que le tournesol (*Helianthus annuus*)*.*

Parmi la famille des Rosaceae, on peut citer les plantes d'intérêt agronomique du genre *Frugaria,* telle que la fraise (*Frugaria sp*.)*.*

Selon un mode de réalisation, les plantes d'intérêt agronomique seront choisies parmi des plantes du genre *Lycopersicum, Solanum, Hordeum, Triticum, Vitis, Spinacia, Brassica,* Zeya, *Allium, Helianthus, Nicotina, Frugaria.*

Selon un mode de réalisation préféré, les plantes d'intérêt agronomique seront choisies parmi des plantes du genre Lycopersicum, Solanum, *Hordeum, Triticum, Vitis, Spinacia, Brassica,* Zeya, *Allium, Helianthus.*

Selon un mode de réalisation, les plantes d'intérêt agronomique seront choisies parmi la tomate (*Lycopersicum esculentum*)*,* la pomme de terre (*Solanum tuberosum*)*,* le tabac (*Nicotiana tabacum*)*,* l'orge (*Hordeum vulgare*)*,* le blé (*Triticum sativum*)*,* le maïs (*Zeya mays*)*,* la vigne (*Vitis vinifera*)*,* l'épinard (*Spinacia oleracea*)*,* le navet (*Brassica rapa*)*,* l'oignon (*Allium cepa*)*,* le tournesol (*Helianthus annuus*)*,* la fraise (*Frugaria sp*.)*.*

Selon un mode de réalisation, les plantes d'intérêt agronomique seront choisies parmi la tomate (*Lycopersicum esculentum*)*,* la pomme de terre (*Solanum tuberosum*)*,* l'orge (*Hordeum vulgare*)*,* le blé (*Triticum sativum*)*,* le maïs (*Zeya mays*)*,* la vigne (*Vitis vinifera*)*,* l'épinard (*Spinacia oleracea*)*,* le navet (*Brassica rapa*)*,* l'oignon (*Allium cepa*)*,* le tournesol (*Helianthus annuus*)*.*

Les inventeurs ont donc avantageusement démontré que les phénylphénalénones, et plus particulièrement l'anigorufone, inhibent significativement le développement des adventices telles que le coquelicot, la morelle noire, le mouron blanc, le ray-gras, le chénopode, le faux millet, le rumex et le pissenlit, et qu'elles préservent les plantes d'intérêt agronomique telles que le blé, le maïs, le tournesol, la tomate, l'oignon, le navet et l'épinard. L'effet herbicide sélectif est préférentiellement observé lorsque les phénylphénalénones selon l'invention sont appliquées par pulvérisation foliaire.

Ainsi, les phénylphénalénones peuvent être administrées dans le milieu à traiter par pulvérisation (herbicide foliaire).

Un herbicide foliaire est appliqué par pulvérisation sur les feuilles et nécessite un adjuvant pour aider le principe actif à pénétrer à l'intérieur des cellules (translocation basipète). A l'inverse, dans le cas d'un herbicide racinaire, le principe actif est absorbé par les racines et conduit par la sève (translocation acropète).

### Composition herbicide

La présente invention concerne également une composition herbicide sélective comprenant
- des phénylphénalénones de formule (I) 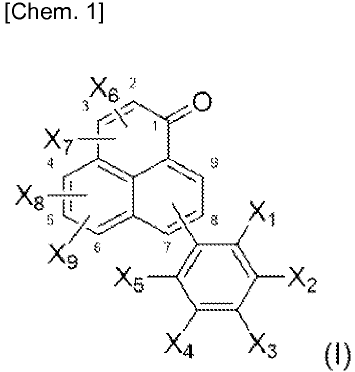 dans laquelle :
   X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
   R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
   le groupement phényl et X₆, X₇, X₈, X₉ peuvent être indépendamment positionnés en C₂, C₃, C₄, C₅, C₆, C₇, C₈, C₉
- au moins un surfactant.

Le surfactant favorise l'adhérence et la pénétration des phénylphénalénones dans les feuilles.

Selon un mode de réalisation, le surfactant sera choisi parmi les surfactants neutres et non ioniques tels que le polyoxyethylène nonylphenylether, par exemple l'Igepal CO-630, commercialisé par la société Sigma Aldrich, les surfactants anioniques tels que les produits commercialisés sous la dénomination clasoft^{®}, texapon^{®}, les surfactants cationiques tels que benzalkonium chloride (BAC) ou le Benzethonium chloride (BZT), les surfactants neutres zwitterioniques.

Selon un mode de réalisation, le surfactant sera choisi parmi les surfactants neutres et non ioniques, préférentiellement le polyoxyethylène nonylphenylether.

Selon un mode de réalisation, les phénylphénalénones seront présentes dans la composition en une teneur comprise entre 0.5 et 50 mg/l, préférentiellement entre 1 et 40mg/l, préférentiellement entre 5 et 30 mg/l, préférentiellement entre 10 et 30mg/l.

Selon un mode de réalisation, les phénylphénalénones seront présentes dans la composition en une teneur comprise entre 7.5 et 15 mg/l.

Selon un mode de réalisation, les phénylphénalénones seront présentes dans la composition en une teneur comprise entre 15 et 25 mg/l.

Selon un mode de réalisation, les phénylphénalénones seront présentes dans la composition en une teneur comprise entre 25 et 35 mg/l.

### Procédé de désherbage

La présente invention concerne également un procédé sélectif de désherbage comprenant au moins une étape d'application de phénylphénalénones de formule (I) 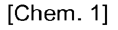 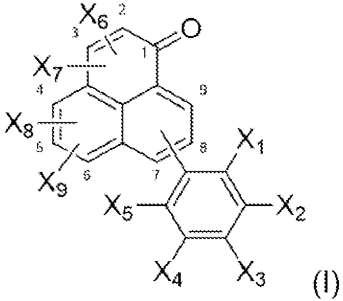 dans laquelle :
X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
le groupement phényl et X₆, X₇, X₈, X₉ peuvent être indépendamment positionnés en C₂, C₃, C₄, C₅, C₆, C₇, C₈, C₉.
dans un espace de culture, lesdites phénylphénalénones étant appliquées par pulvérisation foliaire ou *in vitro.*

Selon un mode de réalisation, les phénylphénalénones sont appliquées par pulvérisation foliaire.

### Espace de culture

On entend par culture ou espace de culture, tout espace permettant de cultiver des plantes et plus particulièrement des plantes d'intérêt agronomique. On citera, à titre illustratif, une serre, un champ, une prairie, une cour, une allée, un jardin, un potager.

### Pulvérisation foliaire

On entend par « pulvérisation foliaire » l'application des phénylphénalénones selon l'invention sur les parties aériennes, préférentiellement les feuilles, des adventices et des plantes d'intérêt agronomique en culture. Les phénylphénalénones produisent alors leur effet herbicide sélectif et systémique par translocation basipète.

Selon un mode de réalisation du procédé de désherbage, les phénylphénalénones, lorsqu'elles sont appliquées par pulvérisation foliaire, sont pulvérisées au stade cotylédon et/ou au stade premières feuilles tel que le stade 2 feuilles et/ou 4 feuilles.

On entend par « stade cotylédonnaire » ou « stade cotylédon », le stade d'émergence des feuilles embryonnaires.

On entend par « stade premières feuilles », le stade de développement des vraies feuilles.

### Application in vitro

On entend par application *in vitro,* l'introduction des phénylphénalénones dans le milieu de culture. Les phénylphénalénones seront alors absorbées par les racines et conduit par la sève (translocation acropète).

Selon un mode de réalisation du procédé de désherbage, les phénylphénalénones, lorsqu'elles sont appliquées *in vitro* , sont introduites dans le milieu avant la mise en culture des graines des plantes d'intérêt agronomique.

Selon un mode de réalisation du procédé de désherbage, les phénylphénalénones, lorsqu'elles sont appliquées par application racinaire, sont introduites dans le milieu lors du semage des graines des plantes d'intérêt agronomique.

### Méthode herbicide sélective

L'invention concerne également une méthode herbicide sélective comprenant au moins une étape d'application de phénylphénalénones de formule (I) 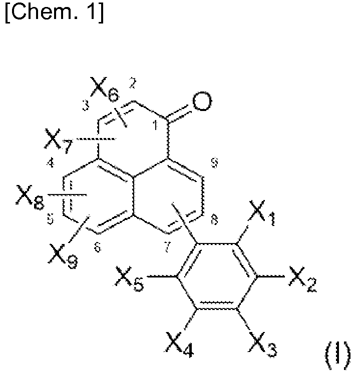 dans laquelle :
X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
le groupement phényl et X₆, X₇, X₈, X₉ peuvent être indépendamment positionnés en C₂, C₃, C₄, C₅, C₆, C₇, C₈, C₉
dans un espace de culture, lesdites phénylphénalénones étant appliquées par pulvérisation foliaire ou *in vitro.*

Selon un mode de réalisation préféré, les phénylphénalénones sont appliquées par pulvérisation foliaire.

Les caractéristiques ci-avant décrites concernant les espaces de culture, l'application foliaire et l'application *in vitro* s'appliquent également à ce mode de réalisation.

### Exemples

### Matériels et méthodes

### Formulation de l'anigorufone

Une solution mère de 5 mM a été préparée dans 50% v/v éthanol (96°). Ensuite, la solution a été diluée davantage dans de l'eau distillée pour obtenir 10 µM pour les tests *in vitro* et 50 µM, 75 µM et 100 µM pour les tests sous serre. 0.1% v/v du surfactant IGEPAL-Co 630 ont été ajoutés sur la solution afin d'obtenir le produit prêt à pulvériser sur les plantules sous serre.

Il est à noter que l'éthanol est connu comme un solvant « vert » et de plus, sa concentration finale est égale à 0.5%, 0.75% et 1 % dans la formulation (application sous serre).

### Modèles végétaux

Les 18 espèces végétales ci-après décrites et appartenant à plusieurs grandes familles de végétaux ont été testées :

**[Tableau 2]**

| Famille des plantules | Espèces testées | Classification |
|---|---|---|
| Solanacées | Tomate *Lycopersicum esculentum* var Marmande | dicot |
| Solanacées | Pomme de terre (*Solanum tuberosum*) Cultivars : Duchesse et Coquine | dicot |
| Poacées | Orge (*Hordeum sativum*) | monocot |
| Vitacées | Vigne (*Vitis vinifera*) Cultivar : Chardonnay | pérenne |
| Poacées | Blé (*Triticum sativum*) | monocot |
| Amaranthacées | Epinard (*Spinacia oleracea*) | dicot |
| Brassicacées | Navet (*Brassica napa*) | dicot |
| Poacées | Maïs (*Zeya mays*) | monocot |
| Liliacées | Oignon (*Allium cepa*) | monocot |
| Astracées | Tournesol (*Helianthus annuus*) | dicot |
| Papavéracées | Coquelicot (*Papaver rhoeas*) | dicot |
| Amaranthacées | Chénopode ((*Chenopodium album*) | dicot |
| Poacées | Faux millet (*Panicum miliaceum*) | monocot |
| Poacées | Ray-gras (*Lolium multiforum*) | monocot |
| Polygonacées | Rumex *(Rumex crispus)* | dicot vivace |
| Solanacées | Morelle noire (*Solanum nigrum*) | dicot |
| Astracées | Pissenlit *(Taraxacum officinale)* | dicot |
| Caryophyllacées | Mouron blanc *(Stellaria media)* | dicot |

### Stérilisation des graines / caryoposes

La stérilisation des graines se fait selon le protocole ci-après décrit. Une stérilisation de surface est tout d'abord effectuée à l'éthanol 70 % (v/v) pendant 2 minutes à température ambiante. L'éthanol est éliminé et les graines / caryopses sont plongés dans 20 % (v/v) d'hypochlorite de sodium pendant 15-20 minutes puis abondamment rincées avec de l'eau stérile. Les graines / caryopses sont laissés au moins une heure dans l'eau avant mise en culture.

### Multiplication in vitro des clones

Les explants sont multipliés de façon stérile à partir de plantules de 1 mois pour la pomme de terre et de deux mois pour les vignes. Les explants de pomme de terre sont multipliés sur un milieu synthétique Murashige et Skoog supplémenté en saccharose 2% et myo-inositol (100 mg/L) pH 5.8. Les explants de vigne sont cultivés sur milieu ½ Chée et Pool supplémenté en saccharose 2%, pH 5.9. Les milieux sont solidifiés par du Sobigel 0.8 %. Les deux milieux sont fournis par Duchefa Biochemie, Haarlem, Netherlands. Les milieux sont autoclavés et après autoclavage (120°C, 20 minutes, 1 bar) et refroidissement du milieu dans les bocaux, l'anigorufone est rajoutée à la concentration désirée. Les explants de vigne sont mis en chambre de culture 25° C et ceux de pomme de terre à 23 °C, photopériode 16 h, 22 °C, densité du flux de photons -100 µmol.m-2.s-1 généré par des lampes cool daylight (OSRAM Lumilux 24W)).

### Culture sous serre

Les différentes graines sont mises en culture sous serre dans du terreau commercial (Terreau universel, Fertiligène). Les graines ont été semées à la serre dans des conditions de température et d'humidité contrôlées (La température varie entre 15 °C et 30 °C selon la saison, et l'humidité relative varie de 50 à 70%.).
6 traitements ponctuels (environ 10 pulvérisations chacun) espacés de 48 h ont été réalisés une semaine après la mise en germination.
Au bout de 7 semaines, les plantules ont été récoltées. Les racines et les parties aériennes ont été séparées et les racines ont été lavées à l'eau distillée et séchées sur papier absorbant. Ces matériels ont été ensuite conservés à -20° C.

### Test de photodégradation

Un test de photodégradation a été réalisé sur l'anigorufone à 100 µM exposée à la lumière du soleil. Une solution d'anigorufone a été préparée à la dose d'intérêt (100 µM) à partir d'une solution mère dans 50 ml d'eau distillée dans des flasks en verre. Les flasks ont été exposés à l'extérieur en pleine lumière du soleil. L'expérience a été réalisée trois fois en juin 2022 sous des conditions de luminosité correspondant à un ciel ensoleillé/partiellement dégagé. 1 ml de la solution a été passé au spectrométrie UV-Visible et la photodégradation a été suivie par la diminution de l'absorbance à 370 nm.

### Test de toxicité

Des vers de pêche (asticots) ont été traités par pulvérisation avec 100 µM (27.2 mg/L) d'anigorufone. 30 vers de pêche ont été cultivés par boite de pétri et 10 pulvérisations ont été réalisées par boite. Les vers de pêche ont été cultivés dans des conditions de photopériode (16h lumière/8h obscurité) ; 8000 Lux ; 22°C). L'expérience a été réalisée 3 fois.

### Exemple 1 : Synthèse et caractérisation de l'anigorufone

Le procédé de synthèse comprend deux réactions :

### Synthèse et caractérisation de la phényl-9-phénalén-1-one

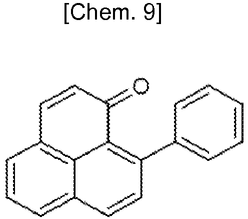

Dans un bicol de 250 mL, 4,68 g (26,7 mmol) de phénalèn-1-one (périnaphténone) sont dissous dans 30 mL de THF anhydre et placés à -40 °C. 40 mL d'une solution à 1 M de bromure de phénylmagnésium sont ajoutés au goutte-à-goutte, et la réaction est maintenue 20 min. Puis le ballon est transféré dans un bain de glace, et la réaction est arrêtée par ajout de 20 mL d'une solution saturée de NH₄Cl. La phase aqueuse est extraite au CH₂Cl₂, la phase organique est décantée, lavée à la saumure, séchée sur MgSO₄ et évaporée. Le résidu est repris dans 30 mL de CH₂Cl₂ et 6,06 g (26,7 mmol) de DDQ sont ajoutés. La réaction est laissée 18 h sous agitation à température ambiante, puis le solvant est évaporé. Le brut réactionnel est purifié sur colonne chromatographique de gel de silice (CH₂Cl₂) pour donner 6,2 g (24,3 mmol, 91%) d'une huile jaune orangé qui cristallise lentement à température ambiante.

**RMN-¹H (CDCl₃)** : **δ (ppm)** = 8.17 (d, *J* = 8.2 Hz, 1H), 8.04 (d, *J* = 8.2 Hz, 1H), 7.78 (d, *J* = 7.0 Hz, 1H), 7.69 (d, *J* = 9.7 Hz, 1H), 7.61 (dd, *J* = 7.4, 8.0 Hz, 1H), 7.59 (d, *J* = 8.2 Hz, 1H), 7.45-7.36 (m, 5H), 6.59 (d, *J* = 9.7 Hz, 1H).

**MALDI,** m/z calculé pour C₁₉H₁₃O [M + H]⁺ : 257.1, trouvé 257.0 (Figure 1).

### Synthèse et caractérisation de la 2-hydroxy-9-phénylphénalénone (aniqorufone)

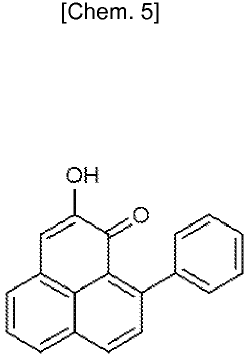

Dans un ballon de 250 mL, 5,05 g (19,5 mmol) de 9-phénylphénalénone sont dissous dans 20 mL de CH₂Cl₂. 7,48 mL d'une solution aqueuse à 40% de Triton B et 2,01 mL d'une solution aqueuse à 70% d'hydroperoxyde de tertiobutyle sont ajoutés, et la solution est fortement agitée pendant deux jours. Le milieu réactionnel est décanté, et la phase aqueuse est lavée au CH₂Cl₂. Les phases organiques sont combinées et le solvant est évaporé. Le produit est alors dissout dans un petit volume de CH₂Cl₂ et 3,17 g (19 mmol) d'acide p-toluènesulfonique sont ajoutés. La réaction est laissée sous agitation pendant une nuit. Le mélange réactionnel est lavé à l'eau, la phase organique est récupérée, séchée et évaporée, et le brut est purifié sur colonne chromatographique (CH₂Cl₂) pour donner 2,95 g (10,8 mmol, 56%) d'une poudre orange.

**RMN-¹H (CDCl₃)** : **δ (ppm)** = 8.24 (d, *J* = 8.2 Hz, 1H), 7.95 (d, *J =* 8.2 Hz, 1H), 7.74 (d, *J* = 7.1 Hz, 1H), 7.60 (d, *J* = 8.2 Hz, 1H), 7.60 (dd, *J* = 7.3, 8.0 Hz, 1H), 7.52-7.37 (m, 5H), 7.13 (s, 1H), 7.03 (s, 1H).

**MALDI,** m/z calculé pour C₁₉H₁₃O₂ [M + H]⁺ : 273.1, trouvé 273.6.

### Exemple 2 : démonstration de l'effet herbicide sélectif de l'anigorufone

### Résultats sous serre / Pulvérisation foliaire

La formulation dont le principe actif est l'Anigorufone 50 µM a été testée sur un système (orge + coquelicot) et sur des plants de tomates avec deux traitements espacés de 48 h.

Les résultats des plantules âgées de 17 jours montrent une efficacité et une sélectivité sur le premier système :
- L'orge pousse normalement
- Le coquelicot est mort

Sur les tomates, le traitement n'affecte pas leur croissance en comparaison avec le lot témoin.

Cette croissance normale des plants d'orge et de tomates perdure deux mois après le traitement avec 50µM d'anigorufone et est similaire à la croissance des plants non traités (Figure 3).

Des essais sous serre ont été réalisés. Toute les plantes ont subi 6 traitements avec 3 doses croissantes C1 (50µM soit 13.6 mg/l) C2 (75µM soit 20.4 mg/l), C3 (100µM soit 27.2 mg/l) espacées de 48 h. La récolte a été réalisée 7 semaines après la mise en germination.

L'anigorufone n'a aucun effet sur 7 espèces de plantes d'intérêts à savoir le blé, le maïs, le tournesol, la tomate, l'oignon, le navet et l'épinard. Etonnement, nous observons une induction de floraison chez le tournesol traité par C1 et C2 (Figure 4).

En revanche, les 8 espèces de mauvaises herbes sont toutes affectées par les traitements (Figure 5). Leur classement selon le degré de résistance figure ci-dessous (du moins résistant + ; au plus résistant ++++++++) :

| Mauvaises herbes | Resistance |
|---|---|
| Coquelicot | + |
| Morelle noire | ++ |
| Mouron blanc | +++ |
| Ray-gras | ++++ |
| Chénopode | +++++ |
| Faux millet | ++++++ |
| Rumex | +++++++ |
| Pissenlit | ++++++++ |

### Exemple 3 : Test de photodégradation de l'anigorufone exposée au soleil

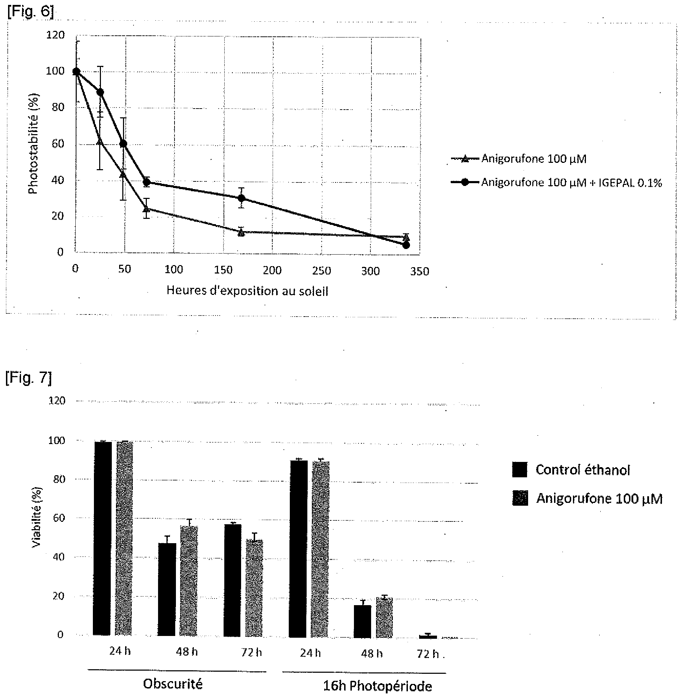

Un test de photodégradation a été réalisé sur l'anigorufone à 100 µM exposée à la lumière du soleil.
Les résultats présentés en Figure 6 montrent que la molécule se dégrade rapidement au bout de 72 h (30-40% molécules persistantes) puis se dégrade quasi-complètement au bout de 2 semaines. Le temps de demi-vie de l'anigorufone se situe entre 2 et 3 jours d'ensoleillement.
Cette expérience démontre que l'anigorufone est rapidement dégradée par le soleil et ne présente donc pas de persistance dans l'environnement après son utilisation comme herbicide, résultant donc en un impact réduit sur la biodiversité végétale.

### Exemple 4 : Test de toxicité de l'anigorufone sur les vers de pêche (asticots)

Des vers de pêche (asticots) ont été traités par pulvérisation avec 100 µM (27.2 mg/L). Les résultats sont présentés en Figure 7.

Le taux de viabilité des asticots dans les conditions de traitement avec l'anigorufone par comparaison aux conditions témoin reste constant ce qui indique que cette molécule testée à 100 µM n'a pas d 'effets sur les vers de pêche.

Cette expérience démontre que l'anigorufone ne présente pas de toxicité pour une espèce animale telle que les vers de pêche et a donc un grand intérêt en tant qu'herbicide ayant un impact réduit sur la biodiversité animale.

## Revendications

1. Utilisation de phénylphénalénones de formule (I) 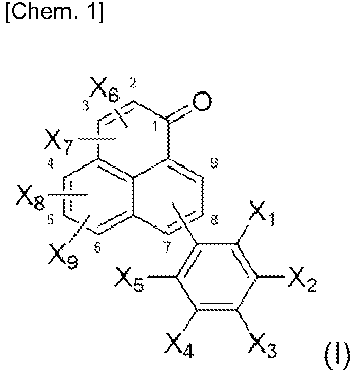
en tant qu'herbicide sélectif
dans laquelle :
X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]le groupement phényl et
X₆, X₇, X₈, X₉ peuvent être indépendamment positionnés en C₂, C₃, C₄, C₅, C₆, C₇, C₈, C₉.

2. Utilisation selon la revendication 1, **caractérisée en ce que** les phénylphénalénones sont des phénylphénalénones de formule (II)

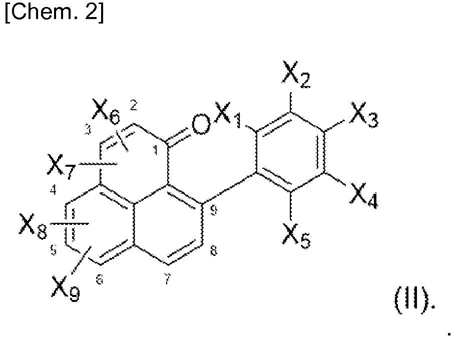

3. Utilisation selon la revendication 1, **caractérisée en ce que** les phénylphénalénones sont des phénylphénalénones de formule (III)

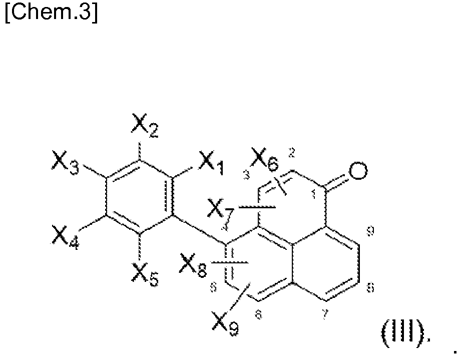

4. Utilisation selon la revendication 1, **caractérisée en ce que** les phénylphénalénones sont des phénylphénalénones de formule (IV)

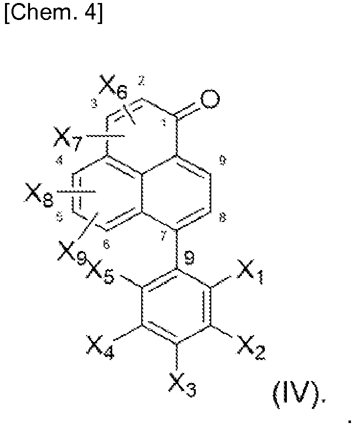

5. Utilisation selon l'une quelconque des revendications 1 à 4, **caractérisée en ce que** les phénylphénalénones sont choisies parmi l'anigorufone, la p-Hydroxyphénylphénalénone, l'hydroxyanigorufone et la lachnanthocarpone.

6. Utilisation selon l'une quelconque des revendications précédentes, **caractérisée en ce que** les phénylphénalénones sont utilisées pour le traitement des plantes appartenant à la famille des Solanacées, des Poacées, des Vitacées, des Amaranthacées, des Brassicacées, des Liliacées, des Astracées, des Rosaceae.

7. Utilisation selon l'une quelconque des revendications précédentes, **caractérisée en ce que** les phénylphénalénones sont utilisées pour le traitement des plantes du genre *Lycopersicum, Solanum, Hordeum, Triticum, Vitis, Spinacia, Brassica,* Zeya, *Allium, Helianthus, Nicotiana, Frugaria.*

8. Utilisation selon l'une quelconque des revendications précédentes, **caractérisée en ce que** les phénylphénalénones ont un effet herbicide sur des adventices appartenant à la famille des Papavéracée, des Amaranthacées, des Poacées, des Polygonacées, des Solanacées, des Astracées, des Caryophyllacées, des Urticaceae.

9. Utilisation selon l'une quelconque des revendications précédentes, **caractérisée en ce que** phénylphénalénones ont un effet herbicide sur des adventices appartenant aux genres *Papaver, Chenopodium, Panicum, Lolium, Rumex, Solanum, Taraxacum, Stellaria, Urtica, Echinochloa, Datura.*

10. Composition herbicide sélective comprenant
- des phénylphénalénones de formule (I) 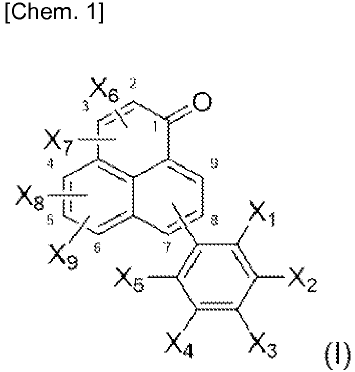 dans laquelle :
X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β -D-glucopyranosyl, [(6"-O-Allophanyl)-β-D-glucopyranosyl]
le groupement phényl et X₆, X₇, X₈, X₉ peuvent être indépendamment positionnés en C₂, C₃, C₄, C₅, C₆, C₇, C₈, C₉
- au moins un surfactant.

11. Procédé sélectif de désherbage comprenant au moins une étape d'application de phénylphénalénones de de formule (I) 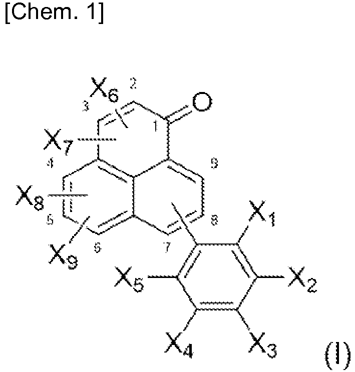 dans laquelle :
X₁, X₂, X₃, X₄, X₅, X₆, X₇, X₈, X₉ sont indépendamment choisis parmi -H, -OR, -NO₂, -NR₂, - CF₃, -COOR, -F, -NHCOR, -SO₃R, Cl, -BR, -I, -CONHR;
R peut être H, un alkyl, un cellobiose, un dérivé de glucopyranosyl tel que un 4-*O*-β-D-glucopyranosyl, un 4-*O*-[(6"-O-Allophanyl)-β-D-glucopyranosyl], un 6-malonyl-β-glucopyranosyl, un 6-malonyl-β-D-glucopyranosyl, un 6-*O*-β-D-glucopyranosyl, un β-D-glucopyranosyl, [(6"-O-Allophanyl)-β-D-glucopyranosyl]
le groupement phényl et X₆, X₇, X₈, X₉ peuvent être indépendamment positionnés en C₂, C₃, C₄, C₅, C₆, C₇, C₈, C₉
dans un espace de culture, lesdites phénylphénalénones étant appliquées par pulvérisation foliaire.

## Patentansprüche

1. Verwendung von Phenylphenalenolen der Formel (1) 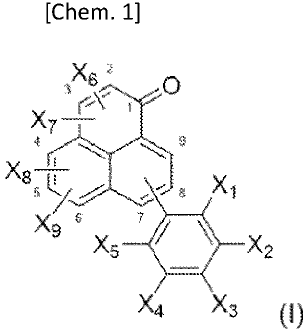
als selektives Herbizid
wobei:
X₁, X₂, X₃, X₄, X₅, X₆, X₇, X₈, X₉ unabhängig voneinander aus -H, -OR, -NO₂, -NR₂, -CF₃, - COOR, -F, -NHCOR, -SO₃R, Cl, -BR, -I, -CONHR gewählt sind;
wobei R H, ein Alkyl, Cellobiose, ein Glucopyranosyl-Derivat wie 4-O-β-D-glucopyranosyl, 4-O-[(6"-O-Allophanyl)-β-D-Glucopyranosyl], ein 6-Malonyl-β-Glucopyranosyl, ein 6-Malonyl-β-D-Glucopyranosyl, ein 6-O-β-D-Glucopyranosyl, ein β-D-Glucopyranosyl, [(6"-O-Allophanyl)-β-D-Glucopyranosyl] sein kann und die Phenylgruppe und X₆, X₇ , X₈, X₉ unabhängig voneinander an C₂, C₃, C₄, C₅, C₆, C₇, C₈, C₉ positioniert sein können.

2. Verwendung nach Anspruch 1, **dadurch gekennzeichnet, dass** die Phenylphenalenone Phenylphenalenone der Formel (II) sind.

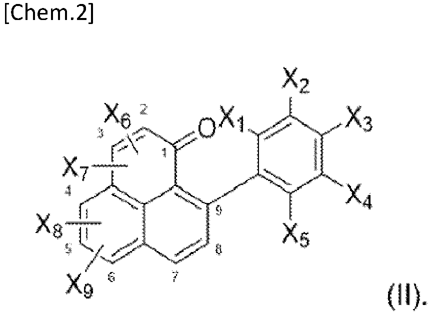

3. Verwendung nach Anspruch 1, **dadurch gekennzeichnet, dass** die Phenylphenalenone Phenylphenalenone der Formel (III) sind.

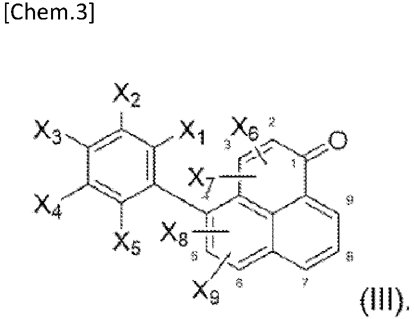

4. Verwendung nach Anspruch 1, **dadurch gekennzeichnet, dass** die Phenylphenalenone Phenylphenalenone der Formel (IV) sind.

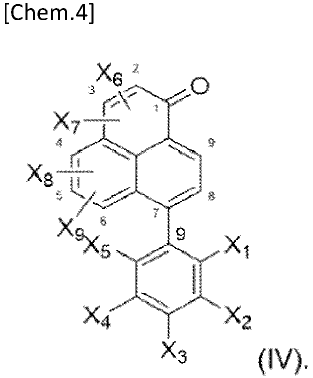

5. Verwendung nach einem der Ansprüche 1 bis 4, **dadurch gekennzeichnet, dass** die Phenylphenalenone gewählt sind aus Anigorufon, p-Hydroxyphenylphenalenon, Hydroxyanigorufon und Lachnanthocarpon.

6. Verwendung nach einem der vorhergehenden Ansprüche, **dadurch gekennzeichnet, dass** die Phenylphenalenone zur Behandlung von Pflanzen der Familien Solanaceae, Poaceae, Vitaceae, Amaranthaceae, Brassicaceae, Liliaceae, Asteraceae und Rosaceae verwendet werden.

7. Verwendung nach einem der vorhergehenden Ansprüche, **dadurch gekennzeichnet, dass** die Phenylphenalenone zur Behandlung von Pflanzen der Gattungen Lycopersicum, Solanum, Hordeum, Triticum, Vitis, Spinacia, Brassica, Zeya, Allium, Helianthus, Nicotiana, Frugaria verwendet werden.

8. Verwendung nach einem der vorhergehenden Ansprüche, **dadurch gekennzeichnet, dass** Phenylphenalenone eine herbizide Wirkung auf Unkräuter der Familien Papaveraceae, Amaranthaceae, Poaceae, Polygonaceae, Solanaceae, Asteraceae, Caryophyllaceae und Urticaceae haben.

9. Verwendung nach einem der vorhergehenden Ansprüche, **dadurch gekennzeichnet, dass** Phenylphenalenole eine herbizide Wirkung auf Unkräuter der Gattungen Papaver, Chenopodium, Panicum, Lolium, Rumex, Solanum, Taraxacum, Stellaria, Urtica, Echinochloa, Datura haben.

10. Selektive herbizide Zusammensetzung, umfassend
- Phenylphenalenone der Formel (I) 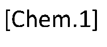 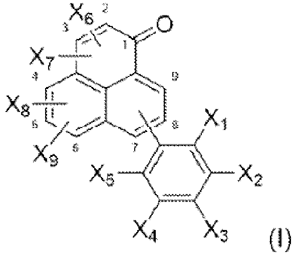 wobei:
X₁, X₂, X₃, X₄, X₅, X₆, X₇, X₈, X₉ unabhängig voneinander aus -H, -OR, -NO₂, -NR₂, -CF₃, - COOR, -F, -NHCOR, -SO₃R, Cl, -BR, -I, -CONHR gewählt sind;
wobei R H, ein Alkyl, Cellobiose, ein Glucopyranosyl-Derivat wie 4-O-β-D-glucopyranosyl, ein 4-O-[(6"-O-Allophanyl)-β-D-Glucopyranosyl], ein 6-Malonyl-β-Glucopyranosyl, ein 6-Malonyl-β-D-Glucopyranosyl, ein 6-O-β-D-Glucopyranosyl, ein β-D-Glucopyranosyl, [(6"-O-Allophanyl)-□-D-Glucopyranosyl] sein kann und die Phenylgruppe und X₆, X₇ , X₈, X₉ unabhängig voneinander an C₂, C₃, C₄, C₅, C₆, C₇, C₈, C₉ positioniert sein können
- wenigstens ein Tensid.

11. Selektives Unkrautbekämpfungsverfahren, umfassend wenigstens einen Schritt des Aufbringens von Phenylphenalenolen der Formel (I) 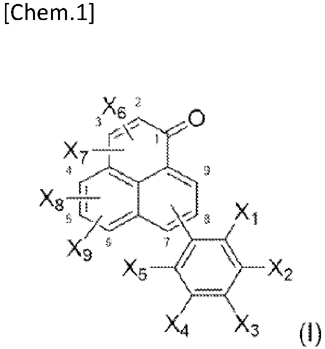
wobei X₁, X₂, X₃, X₄, X₅, X₆, X₇, X₈, X₉ unabhängig voneinander aus -H, -OR, -NO₂, -NR₂, -CF₃, -COOR, -F, -NHCOR, -SO₃R, Cl, -BR, -I, -CONHR gewählt sind;
wobei R H, ein Alkyl, Cellobiose, ein Glucopyranosyl-Derivat wie 4-O-β-D-Glucopyranosyl, ein 4-O-[(6"-O-Allophanyl)-β-D-Glucopyranosyl], ein 6-Malonyl-β-Glucopyranosyl, ein 6-Malonyl-β-D-Glucopyranosyl, ein 6-O-β-D-Glucopyranosyl, ein β-D-Glucopyranosyl, [(6"-O-Allophanyl)-β-D-Glucopyranosyl] sein kann und die Phenylgruppe und X₆, X₇ , X₈, X₉ unabhängig voneinander an C₂, C₃, C₄, C₅, C₆, C₇, C₈, C₉ positioniert sein können,
in einem Kulturraum, wobei die Phenylphenalenole durch Blattsprühen aufgebracht werden.

## Claims

1. Use of phenylphenalenones of formula (I) 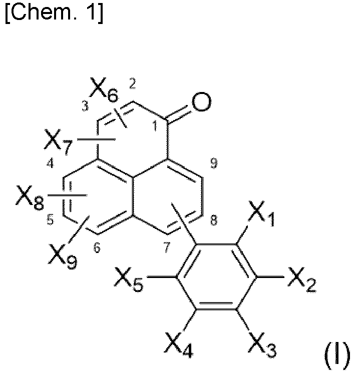
as a selective herbicide,
wherein:
X₁, X₂, X₃, X₄, X₅, X₆, X₇, X₈, X₉ are independently chosen among -H, -OR, -NO₂, -NR₂, -CF₃, -COOR, -F, -NHCOR, -SO₃R, Cl, -BR, -I, -CONHR;
R may be H, an alkyl, a cellobiose, a glucopyranosyl derivative such as a 4-*O*-β-D-glucopyranosyl, a 4-*O*-[(6"-O-Allophanyl)-β-D-glucopyranosyl], a 6-malonyl-β-glucopyranosyl, a 6-malonyl-β-D-glucopyranosyl, a 6-*O*-β-D-glucopyranosyl, a β-D-glucopyranosyl, [(6"-O-Allophanyl)-β-D-glucopyranosyl];
the phenyl group and X₆, X₇, X₈, X₉ may be independently positioned at C₂, C₃, C₄, C₅, C₆, C₇, C₈, C₉.

2. Use according to claim 1, wherein the phenylphenalenones are phenylphenalenones of formula (II)

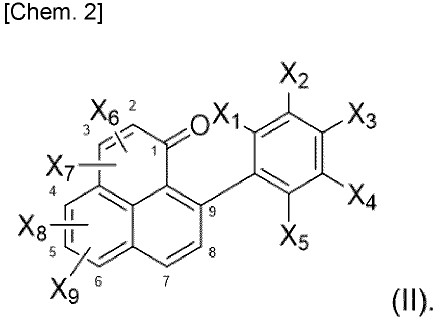

3. Use according to claim 1, wherein the phenylphenalenones are phenylphenalenones of formula (III)

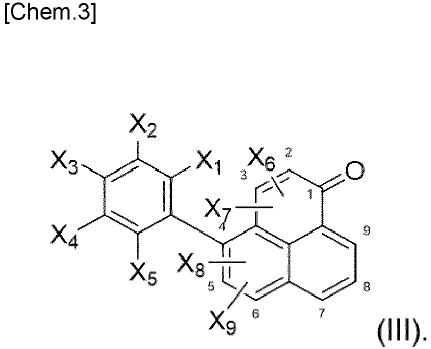

4. Use according to claim 1, wherein the phenylphenalenones are phenylphenalenones of formula (IV)

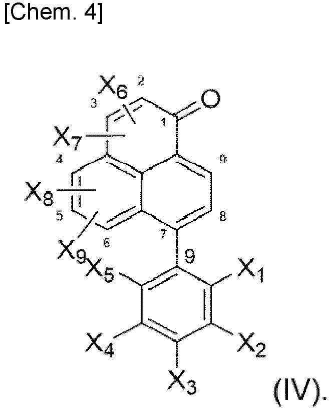

5. Use according to any one of claims 1 to 4, wherein the phenylphenalenones are chosen among anigorufone, p-Hydroxyphenylphenalenone, hydroxyanigorufone, and lachnanthocarpone.

6. Use according to any one of the preceding claims, wherein the phenylphenalenones are used for the treatment of plants belonging to the Solanaceae, Poaceae, Vitaceae, Amaranthaceae, Brassicaceae, Liliaceae, Asteraceae, Rosaceae families.

7. Use according to any one of the preceding claims, wherein the phenylphenalenones are used for the treatment of plants of genus *Lycopersicon, Solanum, Hordeum, Triticum, Vitis, Spinacia, Brassica, Zea, Allium, Helianthus, Nicotiana, Frugaria.*

8. Use according to any one of the preceding claims, wherein the phenylphenalenones have a herbicidal effect on weeds belonging to the Papaveraceae, Amaranthaceae, Poaceae, Polygonaceae, Solanaceae, Asteraceae, Caryophyllaceae, Urticaceae families.

9. Use according to any one of the preceding claims, wherein the phenylphenalenones have a herbicidal effect on weeds belonging to the genera *Papaver, Chenopodium, Panicum, Lolium, Rumex, Solanum, Taraxacum, Stellaria, Urtica, Echinochloa, Datura.*

10. Selective herbicidal composition comprising
- phenylphenalenones of formula (I) 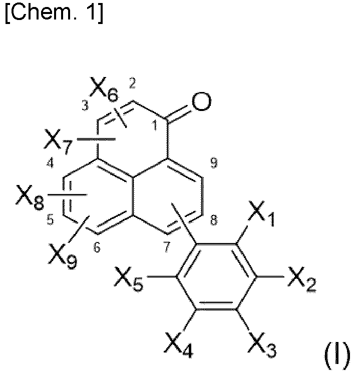 wherein:
X₁, X₂, X₃, X₄, X₅, X₆, X₇, X₈, X₉ are independently chosen among -H, -OR, -NO₂, -NR₂, -CF₃, -COOR, -F, -NHCOR, -SO₃R, Cl, -BR, -I, -CONHR;
R may be H, an alkyl, a cellobiose, a glucopyranosyl derivative such as a 4-*O*-β-D-glucopyranosyl, a 4-*O*-[(6"-O-Allophanyl)-β-D-glucopyranosyl], a 6-malonyl-β-glucopyranosyl, a 6-malonyl-β-D-glucopyranosyl, a 6-*O*-β-D-glucopyranosyl, a β-D-glucopyranosyl, [(6"-O-Allophanyl)-β-D-glucopyranosyl];
the phenyl group and X₆, X₇, X₈, X₉ may be independently positioned at C₂, C₃, C₄, C₅, C₆, C₇, C₈, C₉;
- at least one surfactant.

11. Method for selective weed control, comprising at least one step of applying phenylphenalenones of formula (I) 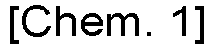 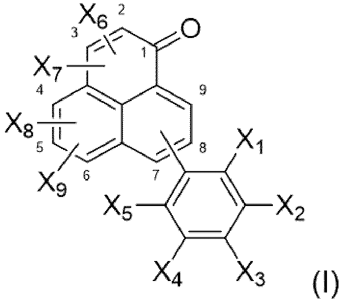 wherein:
X₁, X₂, X₃, X₄, X₅, X₆, X₇, X₈, X₉ are independently chosen among -H, -OR, -NO₂, -NR₂, -CF₃, -COOR, -F, -NHCOR, -SO₃R, Cl, -BR, -I, -CONHR;
R may be H, an alkyl, a cellobiose, a glucopyranosyl derivative such as a 4-*O*-β-D-glucopyranosyl, a 4-*O*-[(6"-O-Allophanyl)-β-D-glucopyranosyl], a 6-malonyl-β-glucopyranosyl, a 6-malonyl-β-D-glucopyranosyl, a 6-*O*-β-D-glucopyranosyl, a β-D-glucopyranosyl, [(6"-O-Allophanyl)-β-D-glucopyranosyl];
the phenyl group and X₆, X₇, X₈, X₉ may be independently positioned at C₂, C₃, C₄, C₅, C₆, C₇, C₈, C₉;
in a cultivation space, said phenylphenalenones being applied by foliar spraying.
